# EUROPÄISCHE PATENTANMELDUNG

(11) **EP 3 040 694 A1**
(43) Veröffentlichungstag der Anmeldung: **06.07.2016**
(21) Anmeldenummer: 15150085.7
(22) Anmeldetag: 05.01.2015
(51) Int. Cl.: G01G 19/24, G01G 21/22, G01G 21/23, G01G 23/00, G01G 11/08, G01G 13/00

(54) **Granulat-Dosieranlage für Kunststoffverarbeitungsmaschinen**

(71) Anmelder: Plast-Control GmbH, 42899 Remscheid (DE)
(72) Erfinder: Konermann, Stefan, 42897 Remscheid (DE)
(74) Vertreter: Ter Meer Steinmeister & Partner

(57) **Zusammenfassung**

Granulat-Dosieranlage für Kunststoffverarbeitungsmaschinen, mit einem Wägebehälter (20), der entfernbar in einer Betriebsposition auf einem Gestell (38) gehalten ist, mehreren Vorratsbehältern (10) mit Auslässen (12), die über Dosierorgane (14) mit einem Einlass des Wägebehälters (20) verbunden sind, einem Mischer (26) mit einem Einlass (28), der an einen Auslass (22) des Wägebehälters angeschlossen ist, und mit einem Sicherheitsschalter (48) und einer Steuereinrichtung (18), die dazu ausgebildet ist, auf ein Ausschaltsignal des Sicherheitsschalters (48) die Dosierorgane (14) und/oder den Mischer (26) abzuschalten, dadurch gekennzeichnet, dass der Wägebehälter (20) so gestaltet ist, dass er in der Betriebsposition einen Zugang zu den Dosierorganen (14) und/oder zu dem Einlass (28) des Mischers (26) versperrt und dass der Sicherheitsschalter (48) so an dem Gestell (38) angeordnet ist, dass er das Ausschaltsignal ausgibt, wenn der Wägebehälter aus der Betriebsposition entfernt wird.

## Beschreibung

Die Erfindung betrifft eine Granulat-Dosieranlage für Kunststoffverarbeitungsmaschinen, mit einem Wägebehälter, der entfernbar in einer Betriebsposition auf einem Gestell gehalten ist, mehreren Vorratsbehältern mit Auslässen, die über Dosierorgane mit einem Einlass des Wägebehälters verbunden sind, einem Mischer mit einem Einlass, der an einen Auslass des Wägebehälters angeschlossen ist, und einem Sicherheitsschalter und einer Steuereinrichtung, die dazu ausgebildet ist, auf ein Ausschaltsignal des Sicherheitsschalters die Dosierorgane und/oder den Mischer abzuschalten.

Solche Anlagen dienen dazu, Kunststoffgranulate verschiedener Sorten in einem vorbestimmten Mengenverhältnis zu mischen, so dass das Gemisch dann in einem Plastifizierer und beispielsweise einem nachgeschalteten Extruder weiterverarbeitet werden kann. Die Dosierorgane sind zumeist als Sperrschieber ausgebildet. Wenn einer dieser Sperrschieber geöffnet wird, so rieselt das Granulat aus dem zugehörigen Vorratsbehälter in den Wägebehälter, der auf einer oder mehreren Wägezellen abgestützt ist, so dass die Gewichtszunahme des Wägebehälters verfolgt werden kann. Wenn die vorgegebene Menge an Granulat der betreffenden Sorte zugeführt worden ist, wird der Schieber geschlossen, und auf die gleiche Weise werden geeignete Mengen der anderen Granulatsorten eindosiert. Wenn der Mischer hinreichend geleert und bereit ist, eine neue Charge an Granulat aufzunehmen, wird der Auslass des Wägebehälters geöffnet, so dass das Granulat in den Mischer eingelassen werden kann.

Die Dosierschieber und auch der Mischer müssen von Zeit zu Zeit durch den Maschinenführer gereinigt werden. Dabei ermöglichen die offenen Auslässe der Vorratsbehälter einen Zugang zu den Dosierschiebern, und der offene Einlass des Mischers ermöglicht einen Zugang zum Inneren des Mischers. Zur Vermeidung von Verletzungsgefahren müssen die Dosierorgane und der Mischer bei laufendem Betrieb jedoch gegen menschlichen Zugriff gesichert werden. Dies geschieht bisher zumeist dadurch, dass die gesamte Anlage von einer Einhausung umgeben ist, die eine durch den Sicherheitsschalter gesicherte Tür hat.

Aufgrund der Einhausung entsteht jedoch ein großer Platzbedarf, zumal auch noch Platz zum Öffnen der Tür freigehalten werden muss. Dieser hohe Platzbedarf ist besonders nachteilig, weil die Dosieranlage zumeist unmittelbar am Ort einer Extrusionsanlage aufgestellt wird, die eine Vielzahl von Extrudern aufweisen kann, so dass beengte räumliche Verhältnisse bestehen. Wenn andererseits die Abmessungen der Einhausung verringert werden, so wird die Bewegungsfreiheit des Maschinenführers bei Wartungs- und Reinigungsarbeiten innerhalb der Einhausung eingeschränkt.

Aufgabe der Erfindung es ist deshalb, eine kompaktere Granulat-Dosieranlage zu schaffen.

Diese Aufgabe wird erfindungsgemäß dadurch gelöst, dass der Wägebehälter so gestaltet ist, dass er in der Betriebsposition einen Zugang zu den Dosierorganen und/oder zu dem Einlass des Mischers versperrt, und dass der Sicherheitsschalter so an dem Gestell angeordnet ist, dass er das Ausschaltsignal ausgibt, wenn der Wägebehälter aus der Betriebsposition entfernt wird.

Erfindungsgemäß wird somit die Zugangssicherung unmittelbar durch den Wägebehälter erreicht, so dass auf eine Einhausung und eine Tür verzichtet werden kann. Vorteilhafte Ausgestaltungen und Weiterbildungen der Erfindung sind in den Unteransprüchen angegeben.

Im folgenden wird ein Ausführungsbeispiel anhand der Zeichnung näher erläutert.

Es zeigen:
- Fig. 1: eine schematische Seitenansicht einer erfindungsgemäßen Dosieranlage;
- Fig. 2: die Anlage nach Fig. 1 in einem Zustand, in dem gerade ein Wägebehälter aus der Anlage entfernt wird;
- Fig. 3: die Anlage in einem Zustand nach Entfernen des Wägebehälters;
- Fig. 4: einen oberen Teil der Anlage nach Fig. 3 in der Draufsicht; und
- Fig. 5: einen unteren Teil der Anlage nach Fig. 3 in der Draufsicht.

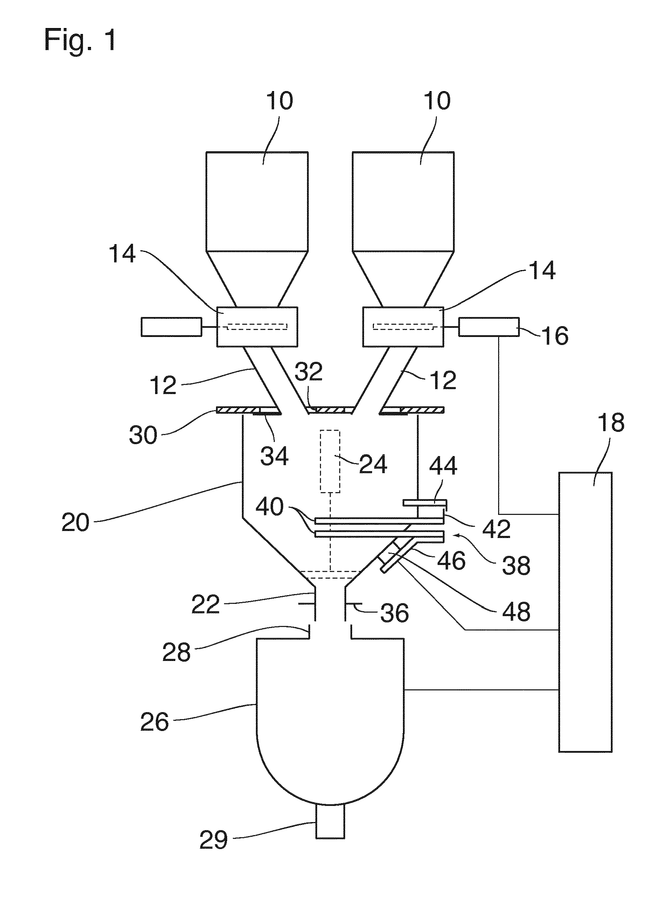

Die in Fig. 1 gezeigte Anlage weist mehrere Vorratsbehälter 10 auf, von denen hier nur zwei dargestellt sind. Jeder Vorratsbehälter hat einen Auslass 12, der mit Hilfe eines als Schieber ausgebildeten Dosierorgans 14 absperrbar ist. Antriebe 16 der Dosierorgane 14 werden von einer elektronischen Steuereinrichtung 18 gesteuert.

Die Auslässe 12 der Vorratsbehälter führen zu einem Einlass eines gemeinsamen Wägebehälters 20. Der Wägebehälter 20 ist trichterförmig ausgebildet und weist einen Auslass 22 auf, der mit Hilfe einer Entnahmevorrichtung 24 absperrbar ist.

Unterhalb des Auslasses 22 ist ein Mischer 26 angeordnet, der über einen Einlass 28 zugänglich ist und einen Auslass 29 aufweist, über den das Gemisch entweder in einen Vorratsbehälter oder direkt in einen Extruder abgegeben wird.

Die trichterförmigen Vorratsbehälter 10 nehmen jeweils einen gewissen Vorrat eines Kunststoffgranulats einer bestimmten Sorte auf. Beispielsweise können sich die Granulate in der Farbe unterscheiden, so dass durch das Mischungsverhältnis die Farbe der aus dem Granulat herzustellenden Kunststoffschmelze und letztlich der daraus gefertigten Produkte bestimmt wird. Ebenso können sich die Granulate jedoch auch in der chemischen Zusammensetzung unterscheiden. Neben Kunststoffgranulaten können wahlweise auch bestimmte Additive zudosiert werden.

Der Mischer 26 und die Entnahmevorrichtung 24 im Wägebehälter 20 werden ebenso wie die Dosierorgane 14 durch die Steuereinrichtung 18 automatisch gesteuert.

Als Beispiel soll zunächst ein Zustand betrachtet werden, in dem der Wägebehälter 20 leer ist und eine neue Charge eines Granulatgemisches mit genau festgelegten Mengenanteilen der verschiedenen Granulatsorten hergestellt werden soll.

Zunächst wird bei geschlossener Entnahmevorrichtung 24 eines der Dosierorgane 14 geöffnet, so dass das betreffende Granulat aus dem Vorratsbehälter 10 über den Auslass 12 in den Wägebehälter 20 rieselt. Der Wägebehälter 20 ist in bekannter Weise auf nicht gezeigten Wägezellen abgestützt, so dass die beim Einrieseln des Granulats eintretende Gewichtszunahme verfolgt werden kann. Wenn sich das Gewicht um einen vorgegebenen Betrag erhöht hat, wird das Dosierorgan 14 wieder geschlossen. Auf entsprechende Weise werden dann nacheinander die Dosierorgane 14 für die übrigen Vorratsbehälter 10 geöffnet, so dass die vorgegebene Menge jeder Granulatsorte in den Wägebehälter 20 eindosiert wird.

Wenn aus dem Mischer 26 eine gewisse Menge des gemischten Granulats in einen nicht gezeigten Plastifizierer abgegeben wurde und der Mischer somit bereit ist, eine neue Charge an Granulat aufzunehmen und zu mischen, so wird die Entnahmevorrichtung 24 des Wägebehälter 20 geöffnet, so dass der Inhalt des Wägebehälters über den Auslass 22 und den Einlass 28 des Mischers 26 in den Mischer fällt. Anschließend wird die Entnahmevorrichtung 24 wieder geschlossen und es kann ein neuer Zyklus beginnen.

Von Zeit zu Zeit müssen die Dosierorgane 14 und der Mischer 26 gewartet und/oder gereinigt werden. Zur Vermeidung von Verletzungsgefahren dürfen diese Arbeiten nur bei stillstehender Anlage durchgeführt werden, also während die Antriebe 16 aller Dosierorgane 14 und auch der Antrieb des Mischers 26 abgeschaltet sind.

In dem hier gezeigten Beispiel ist der Wägebehälter 20 so gestaltet und angeordnet, dass er sowohl den Zugang zu den Dosierorganen 14 über die offenen Auslässe 12 als auch den Zugang zu dem Mischer 26 über dessen Einlass 28 versperrt. Der Wägebehälter 20 ist nach oben durch einen Deckel 30 abgeschlossen, in dem engere Durchtrittsöffnungen 32 für die Auslässe 12 der Vorratsbehälter gebildet sind. Im gezeigten Beispiel liegt der Deckel 30 lose auf Haltern 34 auf, die an den unteren Enden der Auslässe 12 angeordnet sind. Der Deckel wird so in einer Position in geringem Abstand oberhalb des offenen oberen Endes des Wägebehälter 20 gehalten. Aufgrund der schräg verlaufenden Auslässe 12 und der verhältnismäßig engen Öffnungen 32 kann der Deckel 30 nicht so weit angehoben werden, dass man Zugang zum Inneren der Auslässe 12 und damit zu den Dosierorganen 14 erhält. Ebenso verhindert der Auslass 22 des Wägebehälters und ein daran angebrachter Kragen 36 einen Zugang zu dem offenen Einlass 28 des Mischers.

Ein Zugang zu den Dosierorganen 14 und zu dem Mischer 26 ist deshalb nur möglich, wenn der Wägebehälter 20 insgesamt entfernt wird.

In einer alternativen Ausführungsform könnte der Deckel auch auf dem oberen Rand des Wägebehälters aufliegen. Anstelle eines Deckels könnte wahlweise auch eine Schutzgitter vorgesehen sein, das das Granulat durchrieseln lässt, aber verhindert, dass man mit der Hand in den Wägebehälter greift.

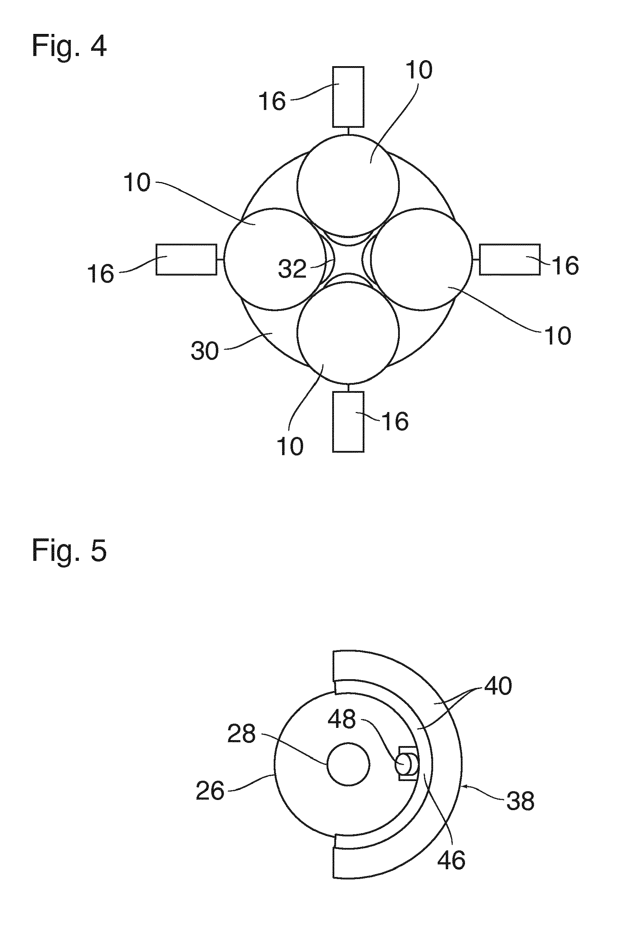

Im gezeigten Beispiel ruht der Wägebehälter 20 mit seinem trichterförmigen unteren Teil auf einem Gestell 38, von dem hier nur zwei C-förmige Rahmen 40 gezeigt sind, die den konischen Teil des Wägebehälters auf einem Umfangswinkel von etwas mehr als 180° umgreifen (siehe auch Fig. 5). An dem oberen Rahmen 40 ist eine aufragende Arretierung 42 angebracht, die von einer fest am Wägebehälter 20 angebrachten Arretiernase 44 hintergriffen wird. Auf diese Weise wird verhindert, dass der Wägebehälter 20 waagerecht (nach links in Fig. 1) aus seiner Betriebsposition herausgezogen werden kann.

An dem unteren Rahmen 40 ist außerdem mit Hilfe eines Halters 46 ein Sicherungsschalter 48 so angebracht, dass er die konische Umfangsfläche des Wägebehälters 20 ertastet. Der Sicherheitsschalter 28 kann beispielsweise ein berührungsloser Schalter sein, ist jedoch so konzipiert, dass er bereits ein Signal erzeugt, sobald der Wägebehälter 20 nur um einen geringfügigen Betrag aus der Betriebsstellung herausbewegt wird. Das entsprechende Signal des Sicherheitsschalters 48 wird an die Steuereinrichtung 18 übermittelt und dient als Abschaltsignal für die Dosierorgane 14 und den Mischer 26.

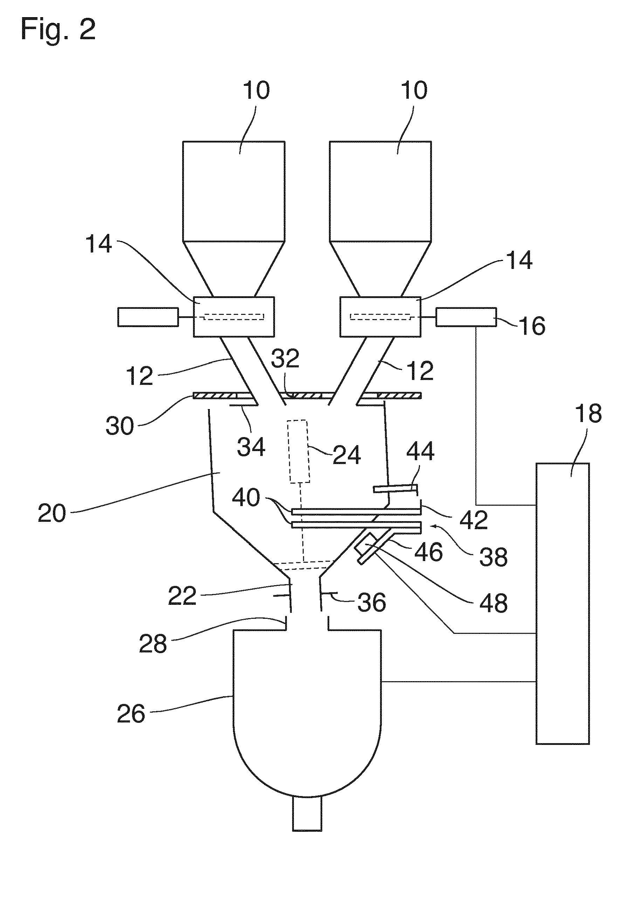

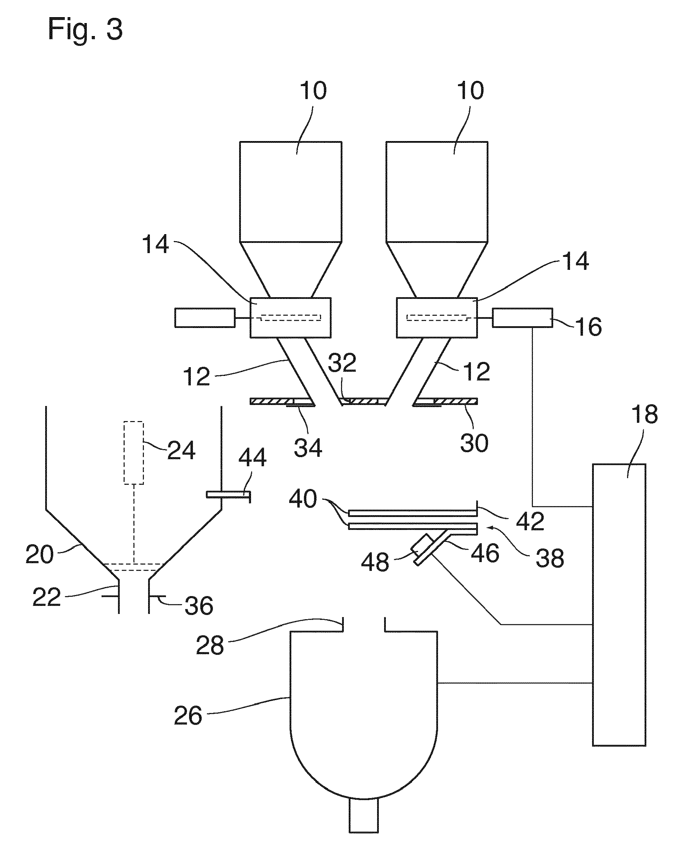

Wenn nun der Wägebehälter 20 entfernt werden soll, um die Dosierorgane 14 und/oder den Mischer 26 zu reinigen oder zu warten, so wird der Wägebehälter 20 leicht um das freie Ende des oberen Rahmens 40 gekippt, wie in Fig. 2 gezeigt ist. Außerdem wird der Wägebehälter leicht nach vorn (nach links in Fig. 2) gezogen, so dass die Arretiernase 44 über die Arretierung 42 hinweg gehoben wird. Auch der Deckel 30 wird dabei vorübergehend etwas angehoben und kommt dabei von den Trägern 34 frei. Schon die geringfügige Bewegung des Wägebehälters, die zu dem in Fig. 2 gezeigten Zustand führt, reicht aus, dass der Sicherheitsschalter 48 anspricht und der Mischer und die Dosierorgane abgeschaltet werden. Anschließend kann der Wägebehälter 20 wieder in die normale Position zurückgeschwenkt und waagerecht (nach links in Fig. 2) aus der Anlage herausgezogen werden, wie in Fig. 3 gezeigt ist.

Wenn die Wartungs- und Reinigungsarbeiten abgeschlossen sind, kann der Wägebehälter 20 in Umkehrung des oben beschriebenen Bewegungsablaufes wieder in Position gebracht werden, so dass auch der Sicherheitsschalter 48 wieder die Anwesenheit des Wägebehälters 20 erfasst. Die Dosierorgane 14 und der Mischer 26 können dann wieder aktiviert werden.

Fig. 4 zeigt in einer Draufsicht den oberen Teil der Dosieranlage (bis einschließlich des Deckels 30) und lässt erkennen, dass hier insgesamt vier Vorratsbehälter 10 um die Mittelachse der Anlage herum angeordnet sind.

Fig. 5 zeigt in einer Draufsicht den unteren Teil der Anlage (unterhalb des Deckels 30), jedoch ohne den Wägebehälter 20 und lässt insbesondere die Form der Rahmen 40 erkennen, die das Gestell 38 bilden.

## Patentansprüche

1. Granulat-Dosieranlage für Kunststoffverarbeitungsmaschinen, mit einem Wägebehälter (20), der entfernbar in einer Betriebsposition auf einem Gestell (38) gehalten ist, mehreren Vorratsbehältern (10) mit Auslässen (12), die über Dosierorgane (14) mit einem Einlass des Wägebehälters (20) verbunden sind, einem Mischer (26) mit einem Einlass (28), der an einen Auslass (22) des Wägebehälters angeschlossen ist, und mit einem Sicherheitsschalter (48) und einer Steuereinrichtung (18), die dazu ausgebildet ist, auf ein Ausschaltsignal des Sicherheitsschalters (48) die Dosierorgane (14) und/oder den Mischer (26) abzuschalten, **dadurch gekennzeichnet, dass** der Wägebehälter (20) so gestaltet ist, dass er in der Betriebsposition einen Zugang zu den Dosierorganen (14) und/oder zu dem Einlass (28) des Mischers (26) versperrt und dass der Sicherheitsschalter (48) so an dem Gestell (38) angeordnet ist, dass er das Ausschaltsignal ausgibt, wenn der Wägebehälter aus der Betriebsposition entfernt wird.

2. Anlage nach Anspruch 1, bei der das Gestell (38) einen im Grundriss C-förmigen Rahmen (40) aufweist, auf dem ein trichterförmiger unterer Teil des Wägebehälters (28) in der Betriebsposition aufliegt.

3. Anlage nach Anspruch 2, bei der der Sicherheitsschalter (48) so auf der Seite des Rahmens (40), die der offenen Seite dieses Rahmens entgegengesetzt ist, angeordnet ist, dass er einem trichterförmigen Wandteil des Wägebehälter (20) zugewandt ist und diesen Wandteil erfasst, wenn der Wägebehälter (20) sich in der Betriebsposition befindet.

4. Anlage nach Anspruch 3, bei der an dem Gestell (38) in der Umfangsposition, in der sich auch der Sicherheitsschalter (48) befindet, eine Arretierung (42) angeordnet ist, die mit einer Arretiernase (44) am Wägebehälter (20) zusammenwirkt und eine horizontale Bewegung des Wägebehälter (20) in Richtung auf die offene Seite des C-förmigen Rahmens (40) verhindert.

5. Anlage nach einem der vorstehenden Ansprüche, bei der der Wägebehälter (20) einen Deckel (30) aufweist, der in der Betriebsposition den Zugang zu den Auslässen (12) der Vorratsbehälter (10) sperrt.

6. Anlage nach Anspruch 5, bei der der Deckel (30) unabhängig von dem Wägebehälter (20) lose auf gestellfesten Haltern (34) aufliegt.
